(19) Europäisches Patentamt
European Patent Office
Office européen des brevets

(11) Publication number: **0 042 047**
**B1**

(12) **EUROPEAN PATENT SPECIFICATION**

(45) Date of publication of patent specification: **18.04.84**

(51) Int. Cl.³: **H 02 K 15/02**, B 21 D 28/10

(21) Application number: **81102648.3**

(22) Date of filing: **08.04.81**

(54) **Method of, and apparatus for, constructing a laminated rotor.**

(30) Priority: **16.06.80 US 159760**

(43) Date of publication of application:
**23.12.81 Bulletin 81/51**

(45) Publication of the grant of the patent:
**18.04.84 Bulletin 84/16**

(84) Designated Contracting States:
**DE FR GB**

(56) References cited:
DE - A - 2 632 382
FR - A - 1 340 213
FR - A - 2 164 480
FR - A - 2 164 507
FR - A - 2 217 089
FR - A - 2 269 814
FR - A - 2 350 900
GB - A - 1 110 594
US - A - 2 910 767
US - A - 3 323 338
US - A - 3 460 415
US - A - 3 571 873
US - A - 3 597 835
US - A - 3 623 385
US - A - 3 823 460
US - A - 4 073 373
US - A - 4 110 895

(73) Proprietor: **International Business Machines Corporation**
**Old Orchard Road**
**Armonk, N.Y. 10504 (US)**

(72) Inventor: **Bruhn, Peter Henry**
**7205 Hart Lane Apt. 3032**
**Austin Texas 78731 (US)**
Inventor: **Wustrau, Rolf**
**4300 Burney Drive**
**Austin Texas 78731 (US)**

(74) Representative: **Combeau, Jacques**
**Compagnie IBM France Département de Propriété Industrielle**
**F-06610 La Gaude (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

Method of, and apparatus for, constructing a laminated rotor

*Description*

Background of the Invention

This invention relates to the manufacture of laminated dynamoelectric motor structures.

In particular, it pertains to assembling laminated rotors from sheet metal stock.

Description of the Prior Art

Prior art relating to the manufacture of laminated dynamoelectric structures includes:

a) U.S. patent 4,110,895 which teaches apparatus for forming a stack of interlocking laminations which apparatus may be arranged to index laminations relative to each other; and

b) U.S. patent 3,202,851 relates to forming stacked interlocked laminations for dynamoelectric machines from sheet metal stock.

Each of the above patents disclose die apparatus having a plurality of stations for seriatim operation up to the removal of the completed stacks. One of the drawbacks of such system is that the whole process is slowed down by a number of operations that have to be done after the completion of a stack, before the next laminae can be processed for starting a new stack. Time and cost efficiency are therefore reduced.

U.S. patent 2,975, 312 relates to correspondingly formed projections and openings in adjacent laminae for interlocking a stack of laminae without a separate fastening element.

Summary of the Invention

The present invention provides a method of, and an apparatus for, constructing a laminated rotor, as defined in claims 1 and 4 and which provide a progressive punch with a plurality of stations for forming lamina of desired configuration from sheet stock. Each lamina is then returned to the sheet stock for travel therewith. Immediately adjacent the progressive die we provide a rotatable carousel carrying a plurality of stations at which laminations may be stacked.

As the carousel rotates stacks of laminations are formed at a first station. Further rotation of the carousel brings the just formed stack to a clipping station for holding the just formed stack together during further operations. The last station in the preferred embodiment is a removal station at which the operator can remove the just formed stack and insert a shaft for receiving another stack. In the meantime in another location on the carousel another stack is being processed resulting in a time and cost efficient method of forming laminated rotor structures.

The foregoing and other objects, features, and advantages of the invention will become apparent from the following, more particular description of a preferred embodiment, as illustrated in the accompanying drawing wherein:

Brief Description of the Drawings

Fig. 1 shows an assembled laminated rotor.

Fig. 2 is a top view of apparatus embodying the invention.

Fig. 3 is a cross-sectional view of the punch and stack station.

Fig. 4 is a sectional view along line 4 of Fig. 1 showing means for indexing the developing stack.

Description of the Preferred Embodiment.

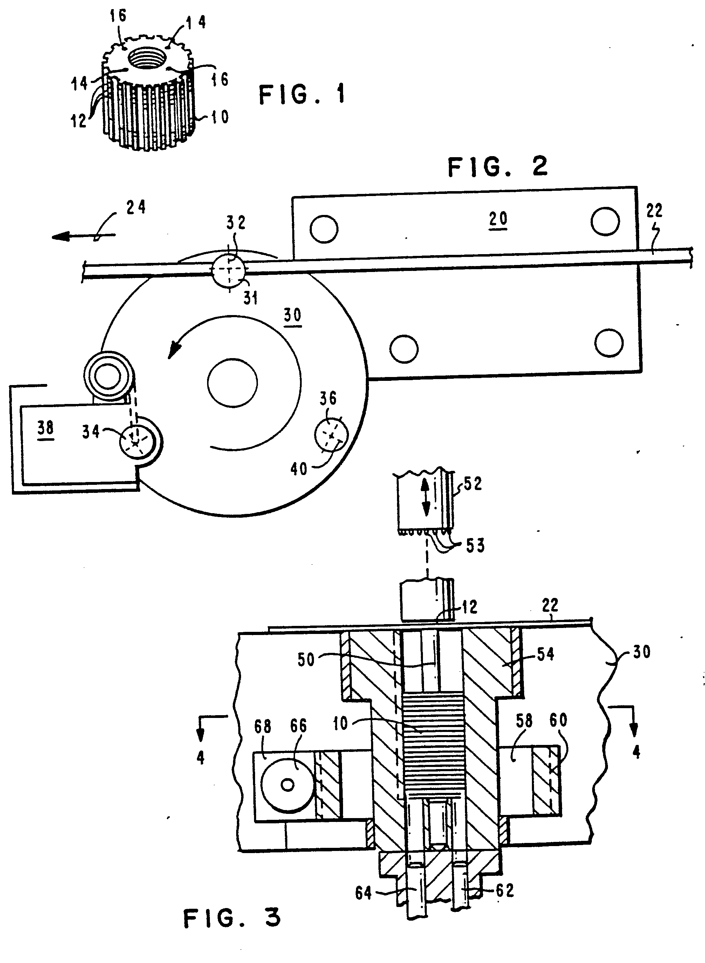

Referring now to Fig. 1 a stack structure 10 is shown comprising a plurality of individual laminae 12 which together make up a rotor for a dynamoelectric machine, in particular a high speed stepper motor. Each lamina 12 is illustrated having alternatingly placed two holes 14 and two correspondingly shaped projections 16. While four have been shown it is obvious to those skilled in the art that other spacings may be chosen.

In Fig. 2 progressive die 20 includes a plurality of forming stations (not shown) for forming individual lamina 12 from sheet stock 12. Sheet stock 22 is moved progressively through progressive die 20 in a conventional manner by means not shown in the direction of arrow 24. Carousel 30 is provided with three work stations 31, 34, and 36. At each of stations 31, 34, and 36, the same operations may occur as carousel 30 rotates past three operation stations, 32, 38, and 40, positioned at evenly spaced locations about its periphery.

Adjacent carousel work station 31, though not shown in Fig. 2 is apparatus located as indicated generally by 32 for blanking the individual lamina formed in sheet stock 22 and forming stack structure 10. This blanking' stacking apparatus will be described in detail with respect to Fig. 3.

Indicated generally at 38, and comprising a clipping station, is a small press for applying a one way clip to the shaft 50 for maintaining alignment during any subsequently desired operations. Projections 16 and holes 14 cooperate to maintain adjacent laminae in an interlocked manner. Each lamina is connected to its neighbor. Thus, stack 10 is a relatively stabilized structure and a clipping operation may be unnecessary.

Indicated generally at 40 is the location of is a stack removal station. It is here that an operator must intervene to remove a completed stack and prepare the machine for its next cycle by inserting a stack receiving shaft.

Fig. 3 illustrates apparatus 32 for dislodging an individual lamina 12 from sheet stock 22 and adding it to a developing stack 10 around operator removable stack receiving shaft 50.

Blanking punch 52 is provided to press an individual lamina 12 from sheet stock 22 onto shaft 50. Shaft 50 is removably attached in member 54 which is rotatably mounted in a plate member. One way clutch 58 and gear 60 are provided to allow precisely indexed rotation of member 54 and, therefore, a stack 10 of laminae 12 being accumulated on shaft 50.

Knockout rods 62 and 64 are provided to aid in the removal of stack structure 10 when it has reached its desired height.

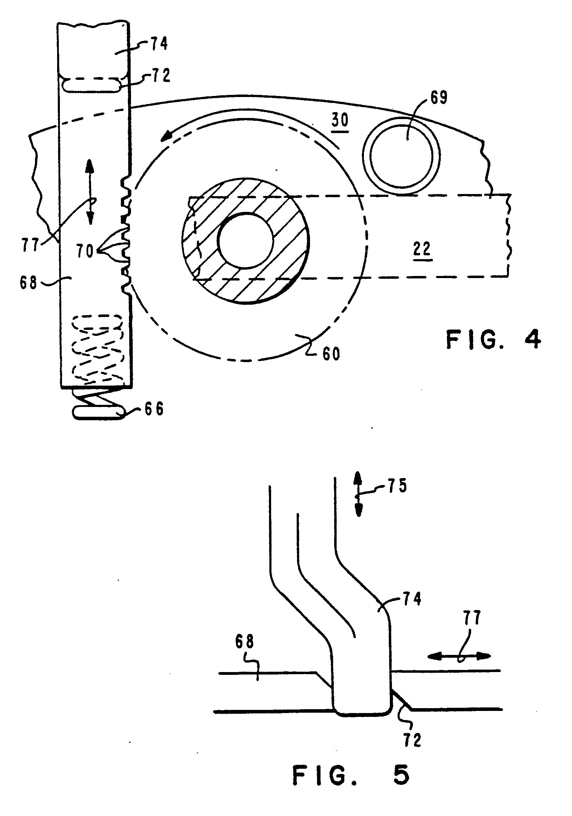

Also seen in Fig. 3 is a side view of spring 66 biased rod 68, for rotating member 54. Rod 68, which can be seen more clearly in Fig. 4, is provided with teeth 70 for engaging gear 60. It will be recalled that in Fig. 1 there were two holes and two protrusions alternatingly spaced about each individual lamina 12. Therefore, it can be seen for this particular embodiment it is necessary to rotate the developing stack 10 90° between each addition to the stack in order to properly align the protrusions and holes in adjacent laminae. Shot pin 69 is provided to lock carousel 30 in position after each index.

As earlier mentioned, if other spacings for holes and depressions are desired, then obviously the amount of rotation would be correspondingly adjusted. Gear 60 is driven by bar 68 through one way clutch 58 approximately 90°. Motion is imparted to bar 68 by means of dog leg cam 74 co-acting with camming surface 72.

Fig. 5 shows cam 74 and rod 68 in cross-section. Cam 74 may be moved in the directions indicated by arrows 75 in any chosen manner to impart motion in directions indicated by arrows 77 to bar 68. It is to be appreciated that this design of bar 68 and gear 60 is for illustration purposes only and that other techniques for accurately indexing may be employed.

OPERATION

A brief description of the operation of the present invention follows. Referring to Fig. 2, a strip 22 advances through progressive die 20 in the direction indicated by arrow 24 until a blanked, and subsequently returned, lamina 12 is positioned over shaft 50 of a carousel mounted work station as shown in Fig. 3. Punch 52 is actuated to press lamina 12 down onto developing rotor stack structure 10. Punch 52 has teeth 52 provided about its lower periphery. These teeth correspond in number and spacing to those desired for the resulting rotor, as is of course to be understood by those skilled in the art.

When the steps of advancing, punching, and stacking at station 32 have been repeated a sufficient number of times to attain the stack 10 height desired, carousel 30 rotates counterclockwise, as indicated in Fig. 1. It is, of course, within the skill of the art to employ any of numerous techniques to detect the achievement of a predetermined height. For example, a means for counting the laminae forced on the shaft may be used. It would be a matter of choice, in the alternative to position a sensor to detect height. Stack structure 10 formed at station 32 is brought to the location adjacent the clip applying means formerly occupied by work station 34. There, press 38 is actuated to attach a one way clip on shaft 50.

As carousel 30 rotated, work station 34 was carried to operating station 40, the rotor removal/shaft insertion station. An operator performs those steps and our apparatus is ready for the next cycle.

While the invention has been particularly shown and described with reference to a preferred embodiment, it will be understood by those skilled in the art that the above mentioned and other changes in form and detail may be made without departing from the spirit and scope of the invention.

**Claims**

1. A method of constructing a laminated rotor from lamina with apparatus including a lamina punch for punching laminae from sheet stock characterized in that it comprises:

a) punching a lamina from said stock with said lamina punch and returning said lamina to said stock;

b) advancing said stock to a work station (31) carrying a rotor shaft (50) and being part of a rotatable carousel (30) having a plurality of rotatable work stations;

c) punching said returned lamina from said stock and forcing said returned lamina onto said shaft at an operation station (32) adjacent to said work station (31);

d) rotating said shaft for each lamina forced onto said shaft (50) and rotating said carousel (30) upon completion of said rotor.

2. The method of Claim 1 characterized in that it comprises the additional step of placing a one-way clip (38) on said shaft (50) to maintain lamina position.

3. The method of either of Claims 1 or 2 characterized in that it comprises also the step of sensing the height of the laminate accumulating on the shaft to determine completion of said rotor.

4. Apparatus for constructing a laminated rotor on a shaft (50) from sheet stock characterized in that it comprises:

a progressive die for forming interlockable lamina and returning said lamina to said sheet stock;

a blanking/stacking station (32) for punching from the sheet stock the lamina and stacking it on said shaft; and

a removal station (40) where a completed rotor is removed and a new shaft provided,

said blanking station (32) and said removal station (40) being positioned about the periphery of a rotatable carousel (30).

5. The apparatus of Claim 4 characterized in that it further comprises a clipping station for temporarily holding a stack in alignment;

said clipping station being also positioned around the periphery of said carousel (30).

6. The apparatus of Claims 4 or 5 characterized in that said carousel includes a plurality of work stations (31, 34, 36,) each able to accept a shaft on which the laminated rotor is assembled.

7. The apparatus of any of Claims 4 through 6 characterized in that said blanking/stacking station (32) further includes means (58, 60) for rotating said shaft a predetermined distance.

8. The apparatus of Claim 7 characterized in that said predetermined distance is determined by the distance between adjacent holes (14) and projections (16) formed on each individual lamina in said progressive die.

## Patentansprüche

1. Verfahren zur Herstellung eines geschichteten Rotors aus Blaettern mittels einer Vorrichtung mit einer Ausstanzanlage zum Ausstanzen Blaettern aus einem Blech-Werkstueck, dadurch gekennzeichnet, dass es folgende Schritte aufweist:

a) Ausstanzen eines Blatts aus dem Blech-Werkstueck mittels der Ausstanzanlage und Rueckkehr des ausgestanzten Blatts in das Blech-Werkstueck,

b) Vorschub des Werkstuecks bis an eine Bearbeitungsstation (31), die eine Rotorwelle (50) traegt und einer drehenden eine Vielfalt von drehenden Arbeitsstationen aufweisenden Ringflaeche (30) zugehoert,

c. Ausstanzen des zurueckgedrueckten Blatts aus dem Werkstueck und Zwangsrueckkehr des Blatts auf der Welle bei einer der Arbeitsstation (31) anliegenden Bearbeitungsstation (32),

d. Drehung der Welle, jeweils wenn jedes Blatt auf der Welle (50) zwangsgedrueckt ist, und Drehung der Ringflaeche (30) bei jedes Rotor-Ergaenzungsschritts.

2. Verfahren nach Anspruch 1, dadurch gekennzeichnet, dass es einen zusaetzlichen Schritt aufweist, der darin besteht, eine Ein-Richtung-Klammer (38) zum Festhalten des Blatts in seiner Stellung auf der Welle (50) anzubringen.

3. Verfahren nach einem der Ansprueche 1 oder 2, dadurch gekennzeichnet, dass es auch einen Abtastschritt zum Abtasten der Hoehe der auf der Welle zusammengesetzten Blattstapel aufweist, um die Ergaenzung des Rotors festzustellen.

4. Vorrichtung zur Herstellung eines geschichteten Rotors auf einer Welle (50) aus dem Blech-Werkstueck, dadurch gekennzeichnet, dass sie aufweist:

eine schrittweise arbeitende Schneidmatrize zur Bearbeitung von verschachtbaren Blaettern und zum Zurueckbringen des bearbeiteten Blatts jeweils in das Werkstueck,

eine Ausstanz- und Stapelungstation (32) zum Ausstanzen des Blatts aus dem Werkstueck und zum Stapeln des Blatts auf der Welle,

eine Station zum Entfernen (40), wo die ergaenzte Welle entfernt und an der Stelle der ergaenzten Welle eine neue Welle eingesetzt ist,

Einsetzen der Ausstanzstation (32) und der Station zum Entfernen (40) um die Peripherie der drehenden Ringflaeche (30).

5. Vorrichtung nach Anspruch 4, dadurch gekennzeichnet, dass sie weiterhin eine Station zum Anklammern, um die Stapel voruebergehend in einer ausgerichteten Lage festzuhalten, aufweist, wobei diese Station auch um die Peripherie der Ringflaeche (30) angeordnet ist.

6. Vorrichtung nach Anspruch 4 oder 5, dadurch gekennzeichnet, dass die Ringflaeche eine Vielfalt von Bearbeitungsstationen (31, 34, 36) aufweist, wobei bei jeder Station eine Welle, auf der der geschichtete Rotor zusammengesetzt ist, angebracht werden kann.

7. Vorrichtung nach einem der Ansprueche 4 bis 6, dadurch gekennzeichnet, dass die Ausstanz-Stapelungsstation (32) weiterhin Mittel (58, 60) zum Drehen der Welle um ein vorbestimmtes Ausmass aufweist.

8. Vorrichtung nach Anspruch 7, dadurch gekennzeichnet, dass das vorbestimmte Ausmass dem Abstand zwischen den beieinanderliegenden Loechern (14) und Vorspruengen (16) entspricht, din in jedem einzelnen Blatt mittels der Schneidmatrize bearbeitet sind.

## Revendications

1. Méthode de fabrication d'un rotor feuilleté comprenant des laminations obtenues avec un appareil de découpage de laminations dans une tôle à usiner, caractérisé en ce qu'elle comprend les étapes suivantes:

a) le découpage d'une lamination dans ladite tôle à usiner avec ledit appareil de découpage de laminations et le retour de la lamination dans ladite tôle.

b) l'avancement de ladite tôle à une station de travail (31) présentant un arbre de rotor (50) et faisant partie d'un carrousel rotatif (30) comportant une pluralité de station de travail rotatives,

c) le dècoupage de ladite lamination ramenée dans ladite tôle et son application sur ledit arbre à une station de fonctionnement (32) adjacente à ladite station de travail (31),

d) la rotation dudit arbre pour chaque lamination installée sur ledit arbre (50) et la rotation dudit support circulaire (30) à l'achèvement dudit rotor.

2. Méthode selon la revendication 1 caractérisée en ce qu'elle comprend une étape supplémentaire d'installation d'un élément de serrage monodirectionnel (38) sur ledit arbre pour maintenir les laminations en position.

3. Méthode de la revendication 1 ou 2 caractérisée en ce qu'elle comprend également une étape de détection de la hauteur des laminations accumulées sur l'arbre pour déterminer l'achèvement dudit rotor.

4. Appareil de fabrication d'un rotor feuilleté sur un arbre (50) à partir d'un tôle à usiner, caractérisé en ce qu'il comprend:

une matrice de découpage progressif pour former des laminations interverrouillables et les ramener dans ladite tôle à usiner,

une station de découpage et d'empilage 32 pour découper les lamelles de ladite tôle à usiner et les empiler sur ledit arbre, et

une station de retrait (40) où un rotor achevé est retiré et un nouvel arbre installé,

ladite station de découpage (32) et ladite station de retrait (40) étant disposées à la périphérie d'un carrousel rotatif (30).

5. Appareil selon la revendication 4 caractérisé en ce qu'il comprend en outre une station de serrage pour maintenir temporairement l'alignement d'une pile, ladite station de serrage étant également disposée à la périphérie dudit carrousel (30).

6. Appareil selon les revendications 4 ou 5 caractérisé en ce que ledit carrousel comprend une pluralité de stations de travail (31, 34, 36) pouvant chacune recevoir un arbre sur lequel le rotor feuilleté est assemblé.

7. Appareil selon l'une quelconque des revendications 4 à 6 caractérisé en ce que ladite station de découpage et d'empilage (32) comporte en outre des moyens (58, 60) pour entrainer ledit arbre en rotation sur une distance prédéterminée.

8. Appareil selon la revendication 7 caractérisé en ce que ladite distance prédéterminée est déterminée par la distance séparant des trous (14) et des tétons (16) adjacents formés sur chaque lamination dans ladite matrice de découpage progressif.

16
14
14
16
12
10
24
32
20
22
31
30
38
34
36
40
52
53
12
22
50
54
30
68
66
10
58
60
4
4
64
62

FIG. 1

FIG. 2

FIG. 3

74
72
69
30
22
77
70
68
60
66

FIG. 4

75
74
77
68
72

FIG. 5